# EUROPEAN PATENT APPLICATION

(11) **EP 4 093 024 A1**
(43) Date of publication of application: **23.11.2022**
(21) Application number: 20925729.4
(22) Date of filing: 18.03.2020
(51) Int. Cl.: H04N 7/18

(54) **INFORMATION PROCESSING PROGRAM, DEVICE, AND METHOD**

(71) Applicant: FUJITSU LIMITED, Kawasaki-shi, Kanagawa 211-8588 (JP)
(72) Inventor: NAKAMURA, Kouji, Kawasaki-shi, Kanagawa 211-8588 (JP)
(74) Representative: Hoffmann Eitle
(86) International application number: PCT/JP2020/012122
(87) International publication number: WO 2021/186645

(57) **Abstract**

An information processing device (10) acquires a sound signal collected by a microphone (20) provided in a venue including a skating rink (30) and a video obtained by identifiably photographing a location of a competitor (32) on the skating rink (30), estimates a takeoff-from-ice time and a landing-on-ice time of a jump performed by the competitor (32) according to a silencing and a return of an ice sound based on the sound signal, synchronizes time information of the sound signal with time information of the video, specifies each of a location corresponding to the takeoff-from-ice time and a location corresponding to the landing-on-ice time in a trajectory of a location of the competitor (32) on the skating rink (30) acquired from the video by motion tracking, and thus, specifies a takeoff-from-ice point and a landing-on-ice point of the jump in figure skating.

## Description

### FIELD

The disclosed technology relates to an information processing program, an information processing device, and an information processing method.

### BACKGROUND

Conventionally, a predetermined point or section such as a location and a posture of a competitor is specified from a video during a sport competition. The predetermined point is, for example, a moment of impact on a ball in golf, baseball, tennis, or the like, a moment of jumping or landing in gymnastics or the like, or the like.

As a technology related to the specification of the predetermined point or section as described above, for example, an information processing device that specifies a decisive moment from consecutive motions of a subject and extracts the moment as an image has been proposed. The device receives sensor data from a sensor attached to a user or an object in contact with the user, and time information corresponding to the sensor data. The device specifies a time at which a predetermined motion pattern occurs in the user or the object based on the sensor data and the time information. Then, the device selects one or a plurality of images from a series of images including the user or the object photographed at predetermined time intervals according to a specified time.

### Related Patent Documents

Patent Document 1: Japanese Patent Application Laid-Open (JP-A) No. 2015-82817

### SUMMARY OF INVENTION

### Technical Problem

As points to be specified, locations of a takeoff-from-ice point and a landing-on-ice point of a jump of figure skating are assumed. In the figure skating, a slight change such as attaching a sensor to a competitor, or wear or shoes worn by the competitor may affect accuracy of jumping or the like. Therefore, it is difficult to specify the locations of the takeoff-from-ice point and the landing-on-ice point of the jump in the figure skating by applying the conventional technique.

As one aspect, an object of the disclosed technology is to specify the takeoff-from-ice point and the landing-on-ice point of the jump in the figure skating.

### Solution to Problem

As one aspect, the disclosed technology acquires a sound signal collected by a microphone provided in a venue including a skating rink, and a first video obtained by photographing a competitor on the skating rink. The disclosed technology estimates a takeoff-from-ice time and a landing-on-ice time of a jump performed by the competitor according to a silencing and a return of an ice sound based on the sound signal. Then, the disclosed technology synchronizes time information of the sound signal with time information of the first video, and acquires a trajectory of the location of the competitor on the skating rink based on the first video. The disclosed technology specifies each of a location corresponding to the takeoff-from-ice time and a location corresponding to the landing-on-ice time in the trajectory of a location of the competitor.

### Advantageous Effects of Invention

As one aspect, there is an effect that a takeoff-from-ice point and a landing-on-ice point of a jump in figure skating can be specified.

### BRIEF DESCRIPTION OF DRAWINGS

Fig. 1 is a block diagram illustrating a schematic configuration of an information processing system according to a first embodiment.
Fig. 2 is a functional block of an information processing device according to the first embodiment.
Fig. 3 is a diagram for explaining estimation of a takeoff-from-ice time and a landing-on-ice time.
Fig. 4 is a diagram for explaining a delay time of a sound signal for a video.
Fig. 5 is a diagram for explaining specification of a takeoff-from-ice point and a landing-on-ice point.
Fig. 6 is a diagram for explaining specific details of the takeoff-from-ice point.
Fig. 7 is a block diagram illustrating a schematic configuration of a computer that functions as the information processing device.
Fig. 8 is a flowchart illustrating an example of an information processing routine according to the first embodiment.
Fig. 9 is a block diagram illustrating a schematic configuration of an information processing system according to a second embodiment.
Fig. 10 is a functional block of an information processing device according to the second embodiment.
Fig. 11 is a diagram for explaining specification of a reference line.
Fig. 12 is a diagram for explaining specification of a frame of a second video indicating a jump section.
Fig. 13 is a diagram for explaining calculation of locations of a distal end and a terminal end of a blade as a predetermined part.
Fig. 14 is a diagram illustrating a rotation angle θ calculated from each of frames included in a jump section.
Fig. 15 is an enlarged view of a portion indicated by a broken-line frame in Fig. 14.
Fig. 16 is a flowchart illustrating an example of an information processing routine according to the second embodiment.

### DESCRIPTION OF EMBODIMENTS

Hereinafter, an example of an embodiment according to the disclosed technology will be described with reference to the drawings.

### <First Embodiment>

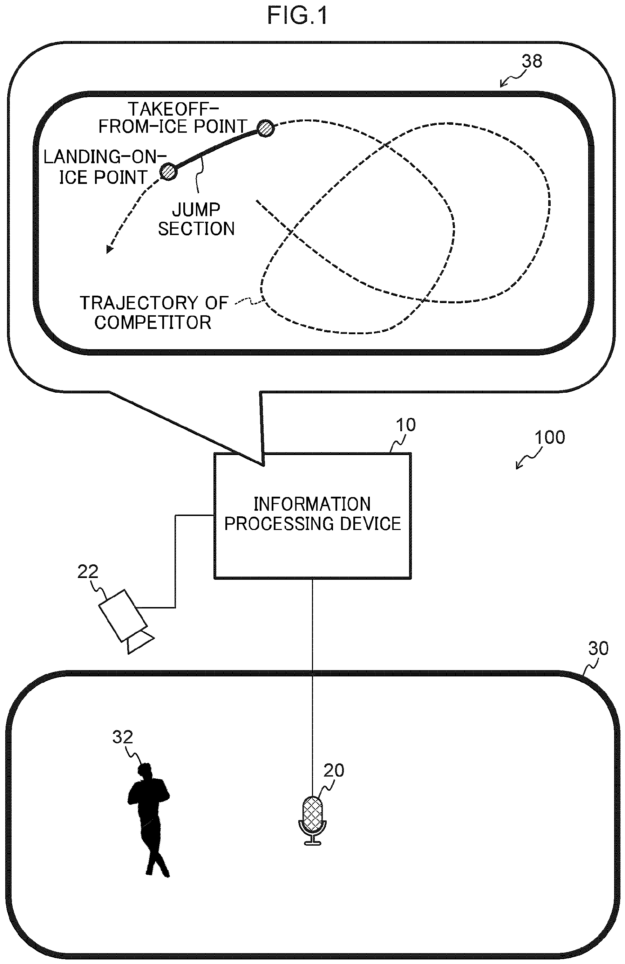

First, an outline of an information processing system according to the first embodiment will be described. As illustrated in Fig. 1, an information processing system 100 includes an information processing device 10, a microphone 20, and a camera 22. The information processing system 100 performs information processing on a sound signal output from the microphone 20 and a video output from the camera 22, and specifies a jump section from a takeoff-from-ice point to a landing-on-ice point on a trajectory of a location of a competitor.

The microphone 20 is installed in ice of a skating rink 30. For example, at the time of setting up the skating rink 30, the microphone 20 can be installed in the ice by being embedded in the skating rink 30 when ice is spread. The microphone 20 collects a voice in a competition venue and outputs a sound signal. Since the microphone 20 is installed in the ice, a sound component indicating cheer, music, or the like is suppressed, and a sound component indicating a frictional sound between a surface (ice) of the skating rink 30 and a blade of a skate shoe becomes dominant in a sound component included in the sound signal collected by the microphone 20. Time information is associated with each sampling point of the sound signal to be output. The frictional sound between the surface (ice) of the skating rink 30 and the blade of the skate shoe is an example of an ice sound.

The camera 22 is, for example, a photographing device for motion tracking that photographs a video capable of specifying the location of the competitor 32 on the skating rink 30. For example, a plurality of (For example, three) cameras 22 is installed on a ceiling, a side wall, or the like of a venue. In Fig. 1, only one camera 22 is illustrated. Each camera 22 outputs a video photographed at a predetermined frame rate (For example, 120 fps). The output video includes a plurality of frames, and time information is associated with each frame.

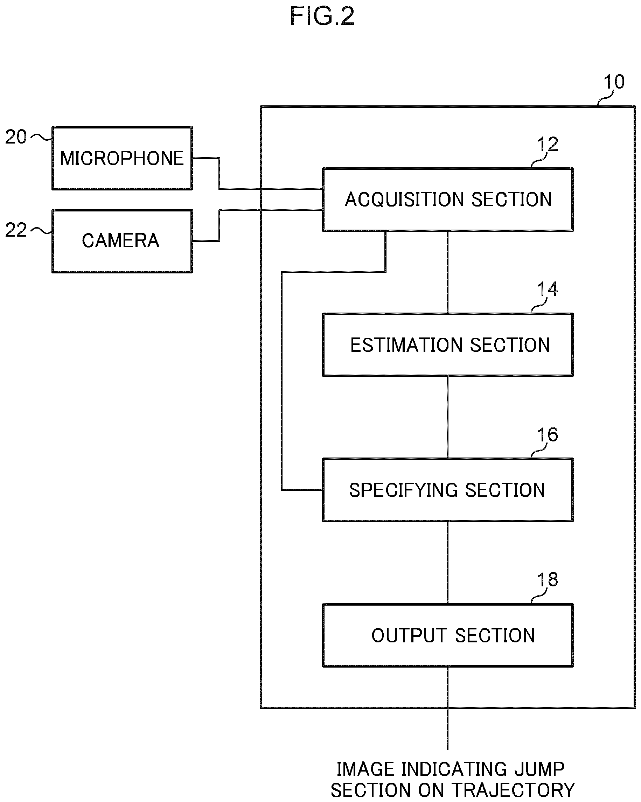

The information processing device 10 functionally includes an acquisition section 12, an estimation section 14, an specifying section 16, and an output section 18 as illustrated in Fig. 2.

The acquisition section 12 acquires the sound signal output from the microphone 20 and the video output from each of the plurality of cameras 22. The acquisition section 12 delivers the acquired sound signal to the estimation section 14 and delivers the acquired video to the specifying section 16.

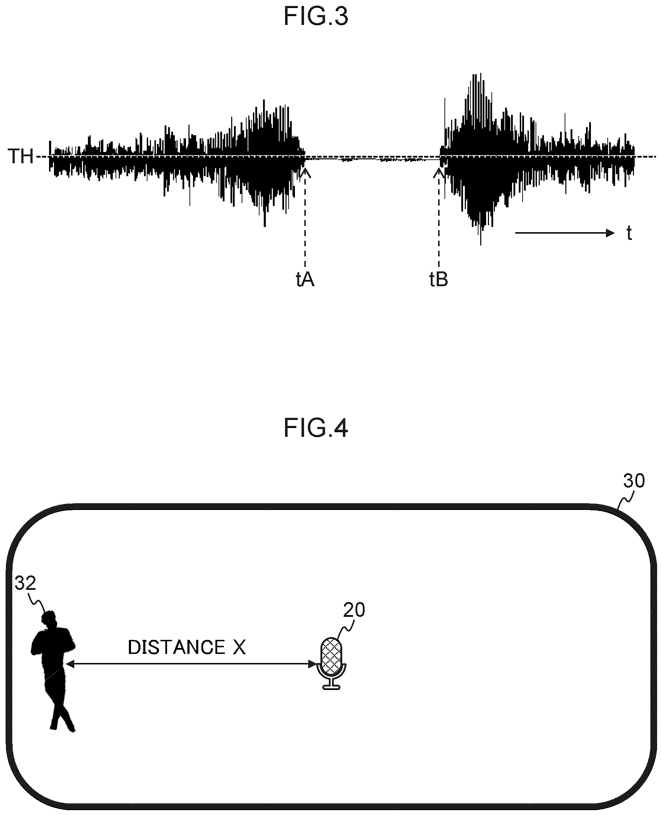

The estimation section 14 estimates a takeoff-from-ice time and a landing-on-ice time of a jump performed by the competitor according to a silencing and a return of the ice sound based on the sound signal. For example, the estimation section 14 estimates the takeoff-from-ice time and the landing-on-ice time of the jump performed by the competitor based on a section in which a level of the sound signal is equal to or less than a predetermined threshold value. This is based on the fact that a frictional sound between the blade and the ice disappears at the time of takeoff-from-ice at the start of the jump, and the frictional sound returns at the time of landing-on-ice. As the threshold value, a value that can be generally regarded as the silencing of the sound signal may be determined. Specifically, as illustrated in Fig. 3, the estimation section 14 estimates a time at which the sound signal becomes equal to or less than a threshold value TH as a takeoff-from-ice time tA. The estimation section 14 estimates, as a landing-on-ice time tB, the time at which the sound signal that has been equal to or less than the threshold value TH again exceeds the threshold value TH.

The estimation section 14 may estimate the takeoff-from-ice time tA and the landing-on-ice time tB of the jump based on the sound signal from which a predetermined frequency component included in the sound signal has been removed. The predetermined frequency component can be, for example, a frequency component corresponding to a sound other than frictional sound between the blade and ice, such as cheers and music. As described above, in a case where the microphone 20 is installed in ice, sounds other than frictional sounds between the blade and the ice, such as cheers and music, are suppressed. However, the takeoff-from-ice time tA and the landing-on-ice time tB of the jump can be estimated with higher accuracy by removing frequency components corresponding to sounds other than frictional sounds between the blade and the ice. In a case where the microphone 20 is installed in a venue that is not in ice, the sound signal includes a lot of cheers, music, and the like, and thus it is effective to remove a predetermined frequency component. The estimation section 14 delivers the estimated takeoff-from-ice time tA and landing-on-ice time tB of the jump to the specifying section 16.

The specifying section 16 acquires a trajectory of the location of the competitor 32 on the skating rink 30 by motion tracking from the video delivered from the acquisition section 12. For example, the specifying section 16 recognizes the competitor 32 that is a target of motion tracking for each frame of the video photographed by each camera 22. For example, the specifying section 16 recognizes the competitor 32 from each frame based on characteristics such as color, shape, and the like of a wearing object worn by the competitor 32 or the competitor 32. The specifying section 16 may recognize a moving object indicated by a difference between frames as the competitor 32. Then, the specifying section 16 calculates the location of the competitor 32 recognized in each frame for each frame. Then, the specifying section 16 generates trajectory information by tracking the location of the competitor in each frame. The location of the competitor may be calculated in three dimensions or in two dimensions. In the present embodiment, a case of calculating location coordinates (x, y) of the recognized competitor 32 in a xy plane in a plan view of the skating rink 30 will be described.

The specifying section 16 synchronizes the time information of the sound signal with the time information of the video. At this time, the specifying section 16 may reflect a delay time of the sound signal with respect to the video according to a distance between the competitor 32 and the microphone 20. Specifically, as illustrated in Fig. 4, in a case where the distance between the competitor 32 and the microphone 20 is X [m], the delay time is X ÷ 3230 using the sound speed of 3230 [m/s] in ice. For example, the specifying section 16 can obtain a maximum value of a distance from the location of the microphone 20 to an end of the skating rink 30 as X = 30 m and the delay time as 30 ÷ 3230 = 9.28 [ms]. The specifying section 16 may use the delay time obtained as described above to synchronize time information obtained by subtracting the delay time from the time information of the sound signal with time information of the video.

The specifying section 16 specifies a section from a location corresponding to the takeoff-from-ice time tA to a location corresponding to the landing-on-ice time tB as a jump section on the trajectory of the location of the competitor 32. As described above, when the delay time of the sound signal is reflected, each of the takeoff-from-ice time tA and the landing-on-ice time tB is time information obtained by subtracting the delay time from each of the takeoff-from-ice time tA and the landing-on-ice time tB estimated by the estimation section 14.

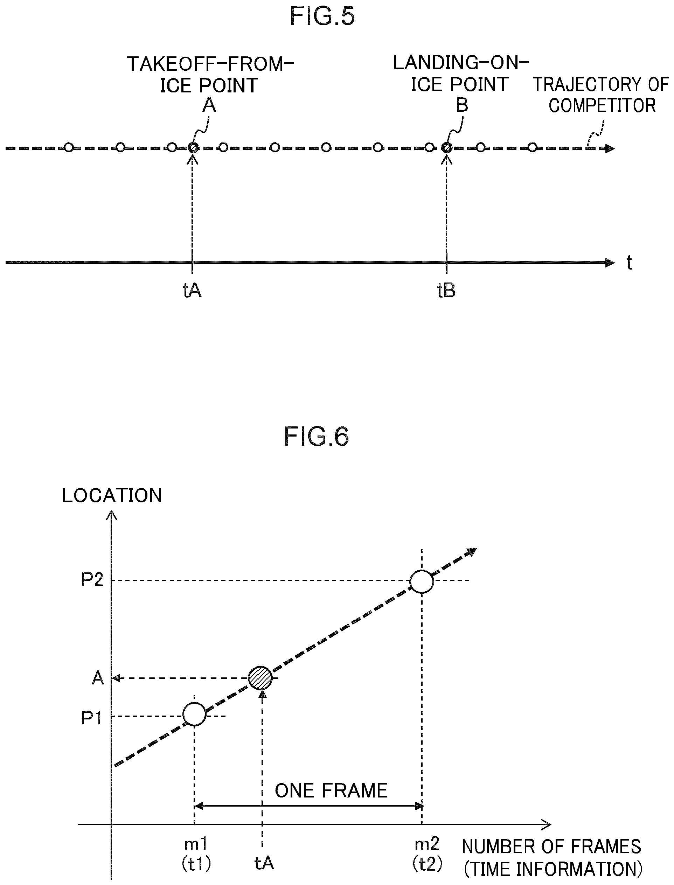

Specifically, as illustrated in Fig. 5, the specifying section 16 specifies the location of the competitor 32 acquired from each of the frames corresponding to the time information immediately before and immediately after the takeoff-from-ice time tA in the video in which the sound signal and the time information are synchronized with each other. Then, the specifying section 16 specifies a location (hereinafter, also referred to as a "takeoff-from-ice point") corresponding to the takeoff-from-ice time tA between the specified two locations. In Fig. 5, for convenience of explanation, the trajectory of the location of the competitor 32 is represented by a straight line corresponding to a time axis of the sound signal.

More specifically, as illustrated in Fig. 6, the specifying section 16 sets a frame corresponding to time information t1 immediately before the takeoff-from-ice time tA to m1, and sets a frame corresponding to time information t2 immediately after the takeoff-from-ice time tA to m2. The specifying section 16 assumes that the location acquired from the frame m1 is PI, the location acquired from the frame m2 is P2, and the location of the competitor 32 changes linearly between PI and P2. In this case, the specifying section 16 specifies a location between PI and P2 and corresponding to a ratio of tA to a time (t2-t1) for one frame as the takeoff-from-ice point A. That is, the specifying section 16 can specify the takeoff-from-ice point by A= PI + (P2 - PI) × (tA - t1)/(t2 - t1).

The specifying section 16 also specifies a location (hereinafter, also referred to as a "landing-on-ice point") corresponding to the landing-on-ice time tB in the same manner as the takeoff-from-ice point. The specifying section 16 delivers the trajectory of the location of the competitor 32 acquired by the motion tracking and the specified locations of the takeoff-from-ice point and the landing-on-ice point to the output section 18.

The output section 18 superimposes an image indicating the trajectory of the location of the competitor 32 on the image indicating the skating rink 30, and generates and outputs image data for displaying the specified jump section in a display mode different from other sections in the trajectory. For example, the output section 18 generates image data indicating an image 38 as illustrated in Fig. 1. In the example of the image 38 of Fig. 1, the trajectory is indicated by a broken line, and the jump section is indicated by a solid line. The image 38 indicated by the output image data is displayed on, for example, a display device or the like used by a referee, and can be used for determining a rink cover or the like. It is also possible to insert the image 38 into a screen of television broadcasting or the like.

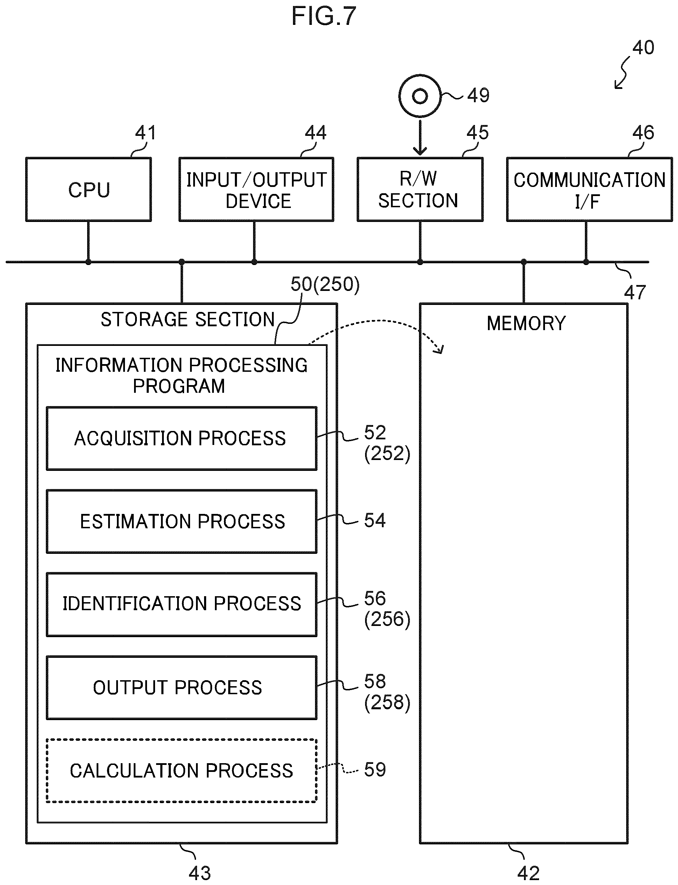

The information processing device 10 can be realized by, for example, a computer 40 illustrated in Fig. 7. The computer 40 includes a central processing unit (CPU) 41, a memory 42 as a temporary storage area, and a nonvolatile storage section 43. The computer 40 includes an input/output device 44 such as an input section and a display section, and a read/write (R/W) section 45 that controls reading and writing of data with respect to a storage medium 49. The computer 40 further includes a communication interface (I/F) 46 connected to a network such as the Internet. The CPU 41, the memory 42, the storage section 43, the input/output device 44, the R/W section 45, and the communication I/F 46 are connected to each other via a bus 47.

The storage section 43 can be realized by a hard disk drive (HDD), a solid state drive (SSD), a flash memory, or the like. The storage section 43 as a storage medium stores an information processing program 50 for causing the computer 40 to function as the information processing device 10. The information processing program 50 includes an acquisition process 52, an estimation process 54, a specification process 56, and an output process 58.

The CPU 41 reads the information processing program 50 from the storage section 43, develops the program in the memory 42, and sequentially executes the processes included in the information processing program 50. The CPU 41 operate as the acquisition section 12 illustrated in Fig. 2 by executing the acquisition process 52. The CPU 41 operates as the estimation section 14 illustrated in Fig. 2 by executing the estimation process 54. The CPU 41 operates as the specifying section 16 illustrated in Fig. 2 by executing the specification process 56. The CPU 41 operates as the output section 18 illustrated in Fig. 2 by executing the output process 58. As a result, the computer 40 that has executed the information processing program 50 functions as the information processing device 10. The CPU 41 that executes the program is hardware.

Functions implemented by the information processing program 50 can also be implemented by, for example, a semiconductor integrated circuit, more specifically, an application specific integrated circuit (ASIC) or the like.

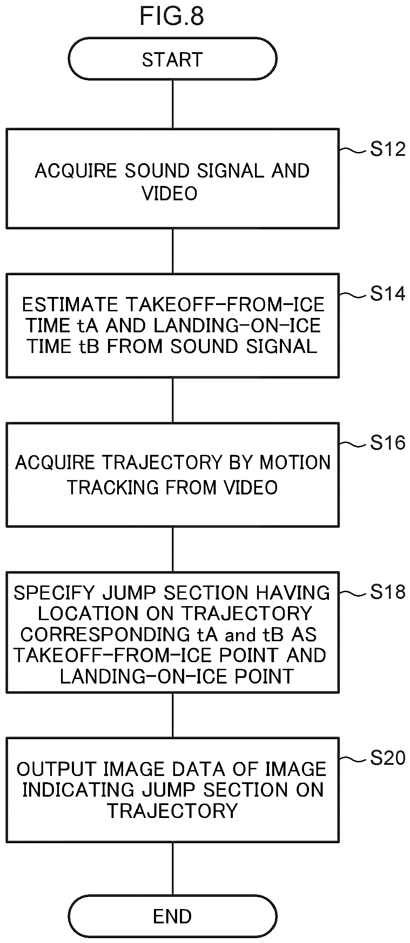

Next, an operation of the information processing system 100 according to the first embodiment will be described. When the sound signal output from the microphone 20 and the video photographed by each of the plurality of cameras 22 are input to the information processing device 10, an information processing routine illustrated in Fig. 8 is executed in the information processing device 10. The information processing routine is an example of an information processing method of the disclosed technology.

In Step S12, the acquisition section 12 acquires the sound signal and the video input to the information processing device 10. The acquisition section 12 delivers the acquired sound signal to the estimation section 14 and delivers the acquired video to the specifying section 16.

Next, in Step S14, the estimation section 14 estimates the time when the sound signal becomes equal to or less than the threshold value TH as the takeoff-from-ice time tA, and estimates the time when the sound signal that has become equal to or less than the threshold value TH again exceeds the threshold value TH as the landing-on-ice time tB. The estimation section 14 delivers the estimated takeoff-from-ice time tA and landing-on-ice time tB of the jump to the specifying section 16.

Next, in Step S16, the specifying section 16 acquires the trajectory of the location of the competitor 32 on the skating rink 30 by motion tracking from each frame of the video delivered from the acquisition section 12.

Next, in Step S18, the specifying section 16 synchronizes the time information of the sound signal with the time information of the video. Then, the specifying section 16 specifies the location of the competitor 32 acquired from each of the frames corresponding to the time information immediately before and immediately after the takeoff-from-ice time tA in each frame of the video in which the sound signal and the time information are synchronized with each other. Then, the specifying section 16 specifies the location of the takeoff-from-ice point A corresponding to the takeoff-from-ice time tA between the specified locations. Similarly, in each frame of the video in which the sound signal and the time information are synchronized with each other, the specifying section 16 specifies the location of the competitor 32 acquired from each of the frames corresponding to the time information immediately before and immediately after the landing-on-ice time tB. Then, the specifying section 16 specifies the location of the landing-on-ice point B corresponding to the landing-on-ice time tB between the specified locations. A section from the specified takeoff-from-ice point A to the landing-on-ice point B is specified as the jump section. The specifying section 16 delivers the trajectory of the location of the competitor 32 acquired by the motion tracking and the specified locations of the takeoff-from-ice point and the landing-on-ice point to the output section 18.

Next, in Step S20, the output section 18 superimposes the image indicating the trajectory of the location of the competitor 32 on the image indicating the skating rink 30, and generates and outputs image data for displaying the specified jump section in the display mode different from the image indicating the trajectory. Then, the information processing routine ends.

As described above, according to the information processing system according to the first embodiment, the information processing device acquires the sound signal collected by the microphone provided in the venue including the skating rink and the video obtained by identifiably photographing the location of the competitor on the skating rink. Then, the information processing device estimates the takeoff-from-ice time and the landing-on-ice time of the jump performed by the competitor according to the silencing and return of the ice sound based on the sound signal. The information processing device synchronizes the time information of the sound signal with the time information of the video image, and specifies each of the location corresponding to the takeoff-from-ice time and the location corresponding to the landing-on-ice time in the trajectory of the location of the competitor on the skating rink acquired from the video by motion tracking. As a result, it is possible to specify the takeoff-from-ice point and the landing-on-ice point of a jump in figure skating without attaching a sensor or the like to the competitor.

By estimating the takeoff-from-ice time and the landing-on-ice time from the sound signal, it is possible to specify the location at a time finer than the time in the time unit of one frame as compared with the case of specifying the location from the video by motion tracking.

### <Second Embodiment>

Next, a second embodiment will be described. In an information processing system according to the second embodiment, the same components as those of the information processing system 100 according to the first embodiment are denoted by the same reference numerals, and detailed description thereof will be omitted.

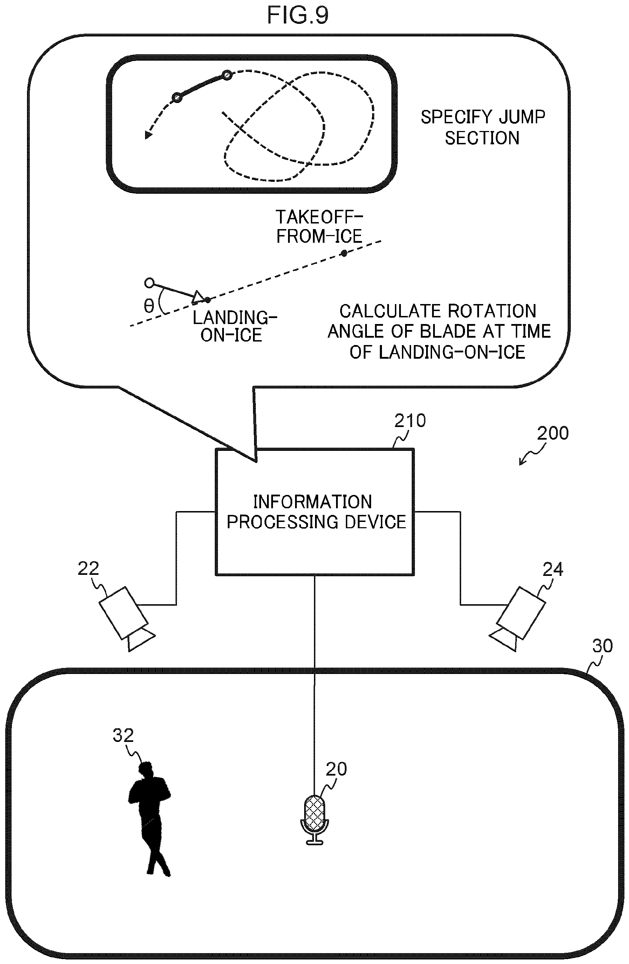

As illustrated in Fig. 9, an information processing system 200 according to the second embodiment includes an information processing device 210, a microphone 20, a first camera 22, and a second camera 24. The information processing system 200 performs information processing on a sound signal output from the microphone 20 and videos output from the first camera 22 and the second camera 24, and specifies a jump section from a takeoff-from-ice point to a landing-on-ice point on a trajectory of a location of a competitor, similarly to the first embodiment. In addition, the information processing system 200 calculates information on the jump, such as a rotation angle of a blade at the time of landing-on-ice of the jump, using the specified the jump section.

The first camera 22 is similar to the camera 22 in the first embodiment, and is, for example, a photographing device for motion tracking that photographs a video capable of specifying a location of a competitor 32 on a skating rink 30.

The second camera 24 is a photographing device that identifiably photographs three-dimensional positions of a predetermined part of a wearing object worn by the competitor 32 and the competitor 32 on the skating rink 30. A plurality of (for example, two) second cameras 24 are installed at locations where the three-dimensional location of the predetermined part can be measured by a stereo camera system. In Fig. 9, only one second camera 24 is illustrated. Each second camera 24 outputs a video photographed at a predetermined frame rate (for example, 30 fps, 60 fps, and the like). The output video includes a plurality of frames, and time information is associated with each frame. One ToF (Time-of-Flight) type camera may be used as the second camera 24.

Hereinafter, the video photographed by first camera 22 is referred to as a first video, and the video photographed by second camera 24 is referred to as a second video.

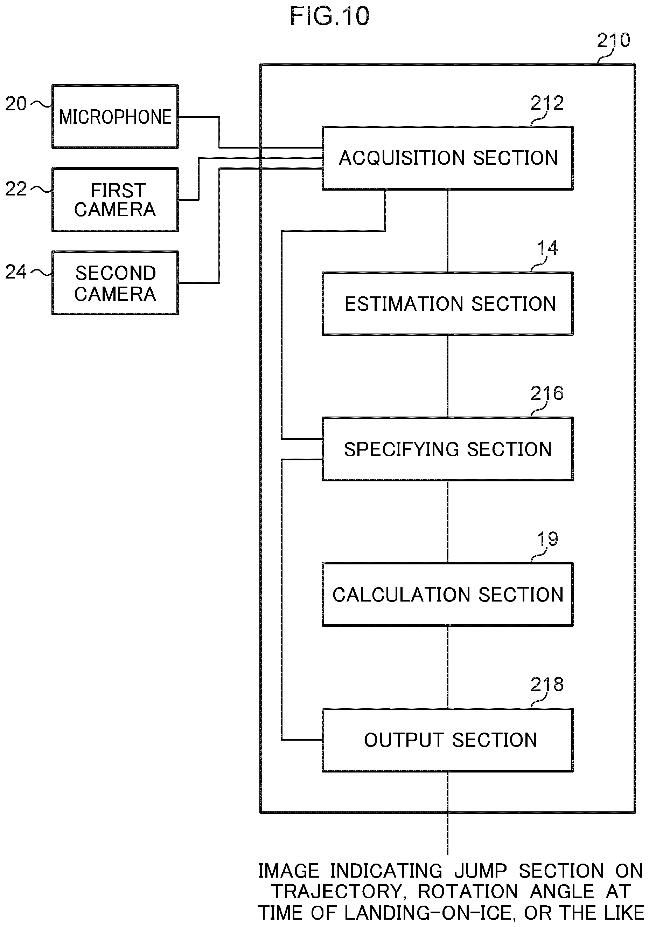

The information processing device 210 functionally includes an acquisition section 212, an estimation section 14, an specifying section 216, a calculation section 19, and an output section 218 as illustrated in Fig. 10.

The acquisition section 212 acquires the sound signal output from the microphone 20, the first video output from each of the plurality of first cameras 22, and the second video output from each of the plurality of second cameras 24. The acquisition section 212 delivers the acquired sound signal to the estimation section 14, and delivers the acquired first video and second video to the specifying section 216.

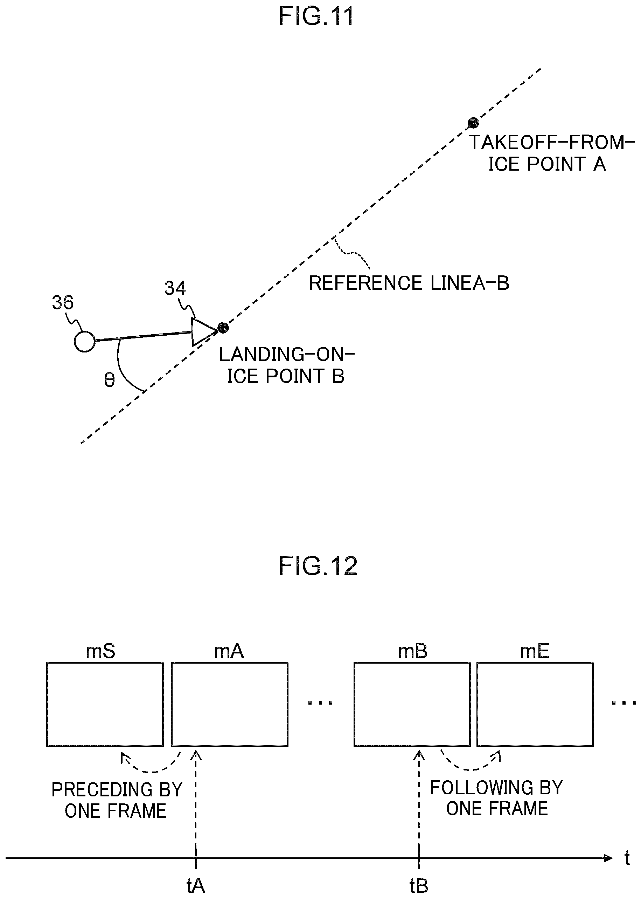

Similarly to the specifying section 16 in the first embodiment, the specifying section 216 specifies a location of each of a takeoff-from-ice point A and a landing-on-ice point B based on a takeoff-from-ice time tA and a landing-on-ice time tB estimated by the estimation section 14 and the first video. As illustrated in Fig. 11, the specifying section 216 specifies a straight line passing through the takeoff-from-ice point A and the landing-on-ice point B as a reference line (A-B) for determining the rotation of the jump. The specifying section 216 delivers the trajectory of the location of the competitor 32 and the locations of the takeoff-from-ice point A and the landing-on-ice point B to the output section 218, and delivers the locations of the takeoff-from-ice point A and the landing-on-ice point B and the information of the reference line (A-B) to the calculation section 19.

The specifying section 216 synchronizes the time information of the sound signal with the time information of the second video, and specifies a frame corresponding to the takeoff-from-ice time tA to a frame corresponding to the landing-on-ice time tB of the jump in the second video delivered from the acquisition section 212 as the jump section.

Specifically, as illustrated in Fig. 12, the specifying section 216 specifies, as a start frame mS corresponding to the takeoff-from-ice time tA, a frame preceding the frame (hereinafter, referred to as a "takeoff-from-ice frame mA") of the second video of the time information synchronized with the takeoff-from-ice time tA, by a predetermined number of frames. The specifying section 216 specifies, as an end frame mE corresponding to the landing-on-ice time tB, a frame following the frame (hereinafter, referred to as a "landing-on-ice frame mB") of the second video of the time information synchronized with the landing-on-ice time tB, by a predetermined number of frames. The reason why the frames before and after the takeoff-from-ice frame mA to the landing-on-ice frame mB are included is to specify the start frame mS and the end frame mE so as to reliably include the takeoff-from-ice to the landing-on-ice. As illustrated in Fig. 12, the predetermined number can be 1, for example.

The specifying section 216 may set the predetermined number as the number obtained by converting a delay time of the sound signal for the video described above into the number of frames. For example, in a case where a distance X [m] between the competitor 32 and the microphone 20 is X = 30 m, the delay time is 30 ÷ 3230 = 9.28 [ms]. In a case where a frame rate of the second video is 30 fps or 60 fps, similarly to the example of Fig. 12, the predetermined number may be 1, and in a case where the frame rate of the second video is 120 fps, the predetermined number may be 2.

The specifying section 216 may use a predetermined number based on the delay time when specifying the start frame mS, and may use 1 as the predetermined number when specifying the end frame mE.

The specifying section 216 extracts a section from the start frame mS to the end frame mE as a jump section from the second video delivered from the acquisition section 212, and delivers the section to the calculation section 19.

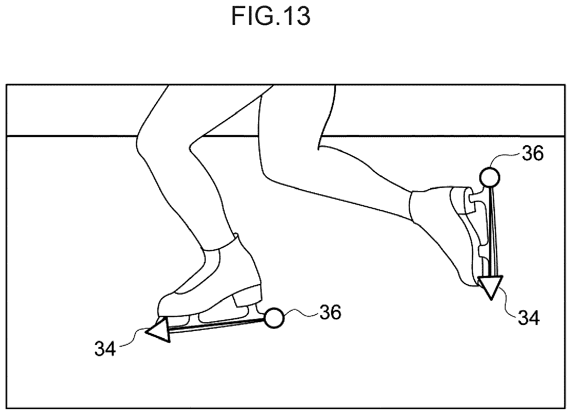

The calculation section 19 three-dimensionally analyzes each of the frames of the second video included in the jump section delivered from the specifying section 216, and calculates the three-dimensional locations (x, y, z) of the predetermined part of the wearing object worn by the competitor 32 and the competitor 32. As illustrated in Fig. 13, the predetermined part includes a distal end 34 and a terminal end 36 of a blade of a skate shoe worn by the competitor 32. The predetermined part may include each joint, head, and face parts such as eyes, nose, and mouth of the competitor 32. As a method of recognizing these predetermined parts from each frame, an existing method such as a recognition method using a shape of a predetermined part or a recognition method using a human skeleton model can be used.

It is assumed that the information processing system 200 includes three or more second cameras 24. In this case, the calculation section 19 may calculate the three-dimensional location of the predetermined part using two images obtained by photographing the competitor 32 at an angle suitable for calculating the three-dimensional location among the videos photographed by each of the plurality of second cameras 24.

The calculation section 19 calculates an absolute angle of the blade with a photographing direction of the second camera 24 as a reference using the locations of the distal end 34 and the terminal end 36 of the blade calculated from each of the frames included in the jump section. For example, the calculation section 19 can calculate an angle formed by the photographing direction of the second camera 24 or a line perpendicular to the photographing direction and a line connecting the distal end 34 and the terminal end 36 of the blade as the absolute angle of the blade. The calculation section 19 may determine any one of the second cameras 24 among the plurality of second cameras 24 as a main camera and calculate the absolute angle of the blade based on a photographing direction of the main second camera 24.

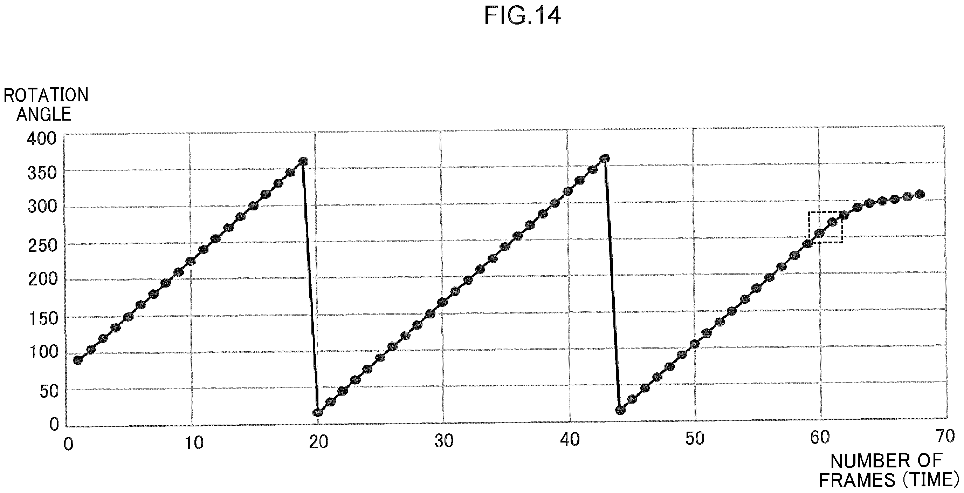

The calculation section 19 converts the absolute angle of the blade into an angle (hereinafter, referred to as a "rotation angle θ") with respect to a reference line for determining insufficient rotation of the jump. Specifically, the calculation section 19 calculates the rotation angle θ of the blade by subtracting the angle difference between the line with the photographing direction of the second camera 24 as a reference and the reference line (A-B) specified by the specifying section 216 from the absolute angle of the blade. Fig. 14 illustrates the rotation angle θ calculated from each of the frames included in the jump section.

The calculation section 19 calculates a delay time Δt of the sound signal for the second video at the time of the landing-on-ice. As described above, the delay time is the distance X [m] ÷ 3230 [m/s] (sound velocity in ice). Here, the distance X is a distance between the location of the microphone 20 and the landing-on-ice point B.

The calculation section 19 calculates the rotation angle of the blade at the time of the landing-on-ice based on a rotation angle θ(mE) calculated from the end frame mE and a rotation angle θ(mE-1) calculated from a frame mE-1 preceding the end frame mE by one frame.

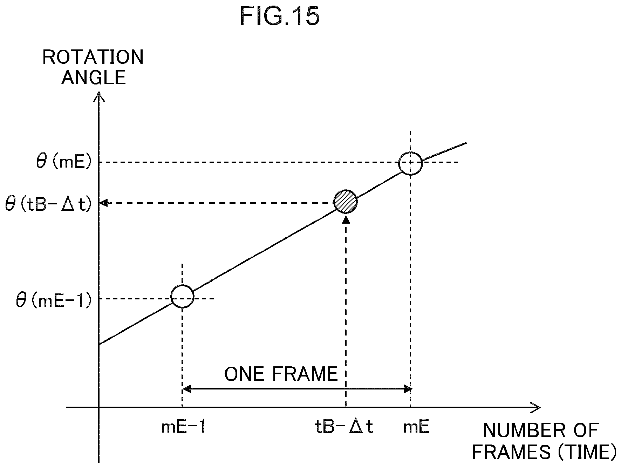

A specific description will be given with reference to Fig. 15. Fig. 15 is an enlarged view of a portion indicated by a broken line frame in Fig. 14. The landing-on-ice time tB estimated based on the sound signal includes a corrected landing-on-ice time tB-Δt in consideration of the calculated delay time Δt within the time of one frame from the frame mE-1 to the frame mE. Here, the delay time Δt is a minute time compared to a time for one frame. The calculation section 19 assumes that the rotation speed during the jump is substantially constant, and linearly interpolates the rotation angle between the frame mE-1 and the frame mE using the rotation angle θ(mE-1) and the rotation angle θ(mE). Then, the calculation section 19 calculates a rotation angle corresponding to the corrected landing-on-ice time tB-Δt as a rotation angle θ(tB-Δt) at the time of the landing-on-ice.

The calculation section 19 can also calculate other information based on the three-dimensional location of the predetermined part corresponding to the jump section. For example, the calculation section 19 can calculate a location of a waist as the predetermined part, and calculate a difference between a minimum value and a maximum value of the location of the waist calculated from each frame included in the jump section as a jump height. The calculation section 19 can calculate the distance from the takeoff-from-ice point A to the landing-on-ice point B specified by the specifying section 216 as a jump distance. The calculation section 19 can calculate a rotation speed from the time from the takeoff-from-ice time tA to the landing-on-ice time tB and the change in the rotation angle in the jump section. The calculation section 19 can calculate a crossing speed from a time from the start frame mS to the predetermined frame and a change amount of the location of the predetermined part during that time. The calculation section 19 delivers the rotation angle θ(tB-Δt) at the time of the landing-on-ice and other calculated information to the output section 218.

Similarly to the output section 18 in the first embodiment, the output section 218 generates and outputs image data of an image 38 indicating the jump section on the trajectory of the location of the competitor 32. The output section 218 outputs information such as the rotation angle θ(tB-Δt) at the time of the landing-on-ice delivered from the calculation section 19. The rotation angle θ(tB-Δt) at the time of the landing-on-ice can be used for determination of insufficient rotation of the jump or the like. The output information can also be used as studs to be displayed on a screen of television broadcasting or the like.

The information processing device 210 can be realized by, for example, a computer 40 illustrated in Fig. 7. A storage section 43 of the computer 40 stores an information processing program 250 for causing the computer 40 to function as the information processing device 210. The information processing program 250 includes an acquisition process 252, an estimation process 54, a specification process 256, a calculation process 59, and an output process 258.

A CPU 41 reads the information processing program 250 from the storage section 43, develops the program in a memory 42, and sequentially executes the processes included in the information processing program 250. The CPU 41 operates as the acquisition section 212 illustrated in Fig. 10 by executing the acquisition process 252. The CPU 41 operates as the estimation section 14 illustrated in Fig. 10 by executing the estimation process 54. The CPU 41 operates as the specifying section 216 illustrated in Fig. 10 by executing the specification process 256. The CPU 41 operates as the calculation section 19 illustrated in Fig. 10 by executing the calculation process 59. The CPU 41 operates as the output section 218 illustrated in Fig. 10 by executing the output process 258. As a result, the computer 40 that has executed the information processing program 250 functions as the information processing device 210.

The functions implemented by the information processing program 250 can also be implemented by, for example, a semiconductor integrated circuit, more specifically, an ASIC or the like.

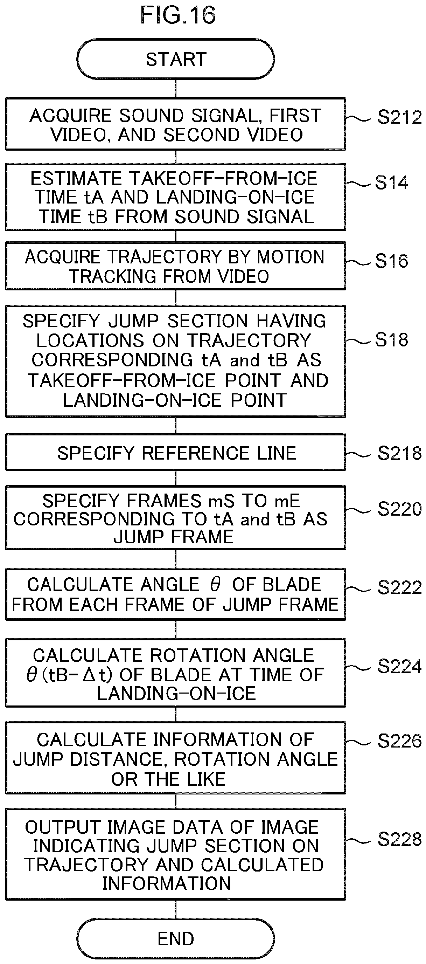

Next, an operation of the information processing system 200 according to the second embodiment will be described. The sound signal output from the microphone 20, the first video photographed by each of the plurality of first cameras 22, and the second video photographed by each of the plurality of second cameras 24 are input to the information processing device 210. Then, the information processing device 210 executes the information processing routine illustrated in Fig. 16. In the information processing routine illustrated in Fig. 16, the same step numbers are assigned to the same processes as those of the information processing routine (Fig. 8) in the first embodiment, and a detailed description thereof will be omitted. The information processing routine is an example of an information processing method of the disclosed technology.

In Step S212, the acquisition section 212 acquires the sound signal, the first video, and the second video input to the information processing device 210. The acquisition section 212 delivers the acquired sound signal to the estimation section 14, and delivers the acquired first video and second video to the specifying section 216.

Through Steps S14 to S18, in the next Step S218, the specifying section 216 specifies the straight line passing through the takeoff-from-ice point A and the landing-on-ice point B as the reference line (A-B) for determining the rotation of the jump using the location of each of the takeoff-from-ice point A and the landing-on-ice point B specified in Step S18.

Next, in Step S220, the specifying section 216 specifies, as the start frame mS corresponding to the takeoff-from-ice time tA, the frame preceding the takeoff-from-ice frame mA of the time information synchronized with the takeoff-from-ice time tA in the second video, by a predetermined number of frames (for example, one frame). The specifying section 216 specifies, as the end frame mE corresponding to the landing-on-ice time tB, the frame following the landing-on-ice frame mB of time information synchronized with the landing-on-ice time tB, by a predetermined number (for example, one frame). The specifying section 216 extracts a section from the start frame mS to the end frame mE as a jump section from the second video delivered from the acquisition section 212, and delivers the section to the calculation section 19.

Next, in Step S222, the calculation section 19 three-dimensionally analyzes each of the frames included in the jump section delivered from the specifying section 216, and calculates a three-dimensional location (x, y, z) of a predetermined part including the distal end 34 and the terminal end 36 of the blade. Then, the calculation section 19 calculates, as the absolute angle of the blade, an angle formed by the line with the photographing direction of the second camera 24 as a reference and the line connecting the distal end 34 and the terminal end 36 of the blade. The calculation section 19 calculates the rotation angle θ of the blade by subtracting the angle difference between the reference line specified by the specifying section 216 in Step S218 and the line with the photographing direction of the second camera 24 as a reference from the absolute angle of the blade.

Next, in Step S224, the calculation section 19 calculates the distance X between the location of the microphone 20 and the landing-on-ice point B, and calculates the delay time Δt of the sound signal with respect to the video at the time of the landing-on-ice as Δt = distance X [m] ÷ 3230 [m/s] (sound velocity in ice). Then, the calculation section 19 linearly interpolates the rotation angle between the frame mE-1 and the frame mE using the rotation angles θ(mE-1) and θ(mE), and calculates the rotation angle corresponding to the corrected landing-on-ice time tB-Δt as the rotation angle θ(tB-Δt) at the time of the landing-on-ice.

Next, in Step S226, the calculation section 19 calculates other information such as the jump distance and the rotation speed based on the three-dimensional location of the predetermined part corresponding to the jump section, the locations of the takeoff-from-ice point A and the landing-on-ice point B specified by the specifying section 216, and the like.

Next, in Step S228, the output section 218 generates image data of the image 38 indicating the jump section on the trajectory of the location of the competitor 32, and outputs the image data and information such as the rotation angle θ(tB-Δt) at the time of the landing-on-ice calculated in Step S226. Then, the information processing routine ends.

As described above, according to the information processing system according to the second embodiment, similarly to the information processing device according to the first embodiment, the information processing device estimates the takeoff-from-ice time and the landing-on-ice time from the sound signal, thereby accurately specifying the locations of the takeoff-from-ice point and the landing-on-ice point. The information processing device specifies a reference line for determining the rotation of the jump using the specified takeoff-from-ice point and landing-on-ice point. As a result, it is possible to support the determination of insufficient rotation of the jump or the like with high accuracy.

In each of the above embodiments, the aspect in which the information processing program is stored (installed) in the storage section in advance has been described, but the present invention is not limited thereto. The program according to the disclosed technology can also be provided in a form stored in a storage medium such as a CD-ROM, a DVD-ROM, or a USB memory.

### Explanation of Reference Numerals

- 10, 210: information processing device
- 12, 212: acquisition section
- 14: estimation section
- 16, 216: specifying section
- 18, 218: output section
- 19: calculation section
- 20: microphone
- 22: camera, first camera
- 24: second camera
- 30: skating rink
- 32: competitor
- 34: distal end of blade
- 36: terminal end of blade
- 38: image
- 40: computer
- 41: CPU
- 42: memory
- 43: storage section
- 49: storage medium
- 50, 250: information processing program
- 100, 200: information processing system

## Claims

1. An information processing program for causing a computer to execute processing, the processing comprising:
acquiring a sound signal collected by a microphone provided in a venue including a skating rink and a first video obtained by photographing a competitor on the skating rink;
estimating a takeoff-from-ice time and a landing-on-ice time of a jump performed by the competitor according to a silencing and a return of an ice sound based on the sound signal; and
synchronizing time information of the sound signal with time information of the first video, and specifying each of a location corresponding to the takeoff-from-ice time and a location corresponding to the landing-on-ice time in a trajectory of a location of the competitor on the skating rink based on the first video.

2. The information processing program according to claim 1, wherein:
the location of the competitor in the trajectory is acquired corresponding to each of frames included in the first video,
the location corresponding to the takeoff-from-ice time is specified between a location acquired from a frame corresponding to time information immediately before the takeoff-from-ice time and a location acquired from a frame corresponding to time information immediately after the takeoff-from-ice time, and
the location corresponding to the landing-on-ice time is specified between a location acquired from a frame corresponding to time information immediately before the landing-on-ice time and a location acquired from a frame corresponding to time information immediately after the landing-on-ice time.

3. The information processing program according to claim 1 or 2, wherein:
when the time information of the sound signal and the time information of the first video are synchronized with each other, a delay time of the sound signal with respect to the first video is reflected.

4. The information processing program according to any one of claims 1 to 3, the processing further comprising:
superimposing an image indicating the trajectory of the location of the competitor on an image indicating the skating rink, and outputting image data for displaying a specified jump section in a display mode that is different from other sections in the trajectory.

5. The information processing program according to any one of claims 1 to 4, the processing further comprising:
specifying a straight line passing through the location corresponding to the takeoff-from-ice time and the location corresponding to the landing-on-ice time as a reference line for determining rotation of the jump.

6. The information processing program according to claim 5, the processing further comprising:
acquiring a second video obtained by identifiably photographing three-dimensional locations of a predetermined part of a wearing object worn by the competitor and the competitor on the skating rink; and
synchronizing the time information of the sound signal with time information of the second video and calculating an angle of the predetermined part with respect to the reference line based on a three-dimensional location of the predetermined part acquired by three-dimensional image analysis from each of frames corresponding to a jump section included in the second video.

7. The information processing program according to claim 6, wherein:
the predetermined part is a part specifying a direction of a blade of a skate shoe worn by the competitor.

8. The information processing program according to any one of claims 1 to 7, wherein:
the microphone is provided in ice of the skating rink.

9. The information processing program according to any one of claims 1 to 8, wherein:
the takeoff-from-ice time and the landing-on-ice time are estimated based on a sound signal from which a predetermined frequency component included in the sound signal has been removed.

10. An information processing device, comprising:
an acquisition section configured to acquire a sound signal collected by a microphone provided in a venue including a skating rink and a first video obtained by photographing a competitor on the skating rink;
an estimation section configured to estimate a takeoff-from-ice time and a landing-on-ice time of a jump performed by the competitor according to a silencing and a return of an ice sound based on the sound signal; and
a specifying section configured to synchronize time information of the sound signal with time information of the first video and specify each of a location corresponding to the takeoff-from-ice time and a location corresponding to the landing-on-ice time in a trajectory of a location of the competitor on the skating rink based on the first video.

11. The information processing device according to claim 10, wherein:
the specifying section
acquires the location of the competitor in the trajectory corresponding to each of frames included in the first video,
specifies the location corresponding to the takeoff-from-ice time between a location acquired from a frame corresponding to time information immediately before the takeoff-from-ice time and a location acquired from a frame corresponding to time information immediately after the takeoff-from-ice time, and
specifies the location corresponding to the landing-on-ice time between a location acquired from a frame corresponding to time information immediately before the landing-on-ice time and a location acquired from a frame corresponding to time information immediately after the landing-on-ice time.

12. The information processing device according to claim 10 or 11, wherein:
when the time information of the sound signal and the time information of the first video are synchronized with each other, the specifying section reflects a delay time of the sound signal with respect to the first video.

13. The information processing device according to any one of claims 10 to 12, further comprising:
an output section configured to superimpose an image indicating the trajectory of the location of the competitor on an image indicating the skating rink, and output image data for displaying a specified jump section in a display mode that is different from other sections in the trajectory.

14. The information processing device according to any one of claims 10 to 13, wherein:
the specifying section further specifies a straight line passing through the location corresponding to the takeoff-from-ice time and the location corresponding to the landing-on-ice time as a reference line for determining rotation of the jump.

15. The information processing device according to claim 14, wherein:
the acquisition section acquires a second video obtained by identifiably photographing three-dimensional locations of a predetermined part of a wearing object worn by the competitor and the competitor on the skating rink, and
the information processing device further includes a calculation section configured to synchronize the time information of the sound signal with time information of the second video and calculate an angle of the predetermined part with respect to the reference line based on a three-dimensional location of the predetermined part acquired by three-dimensional image analysis from each of frames corresponding to a jump section included in the second video.

16. The information processing device according to claim 15, wherein:
the predetermined part is a part specifying a direction of a blade of a skate shoe worn by the competitor.

17. The information processing device according to any one of claims 10 to 16, wherein:
the microphone is provided in ice of the skating rink.

18. The information processing device according to any one of claims 10 to 17, wherein:
the estimation section estimates the takeoff-from-ice time and the landing-on-ice time based on a sound signal from which a predetermined frequency component included in the sound signal has been removed.

19. An information processing method for causing a computer to execute processing, the processing comprising:
acquiring a sound signal collected by a microphone provided in a venue including a skating rink and a first video obtained by photographing a competitor on the skating rink;
estimating a takeoff-from-ice time and a landing-on-ice time of a jump performed by the competitor according to a silencing and a return of an ice sound based on the sound signal; and
synchronizing time information of the sound signal with time information of the first video, and specifying each of a location corresponding to the takeoff-from-ice time and a location corresponding to the landing-on-ice time in a trajectory of a location of the competitor on the skating rink based on the first video.

20. A storage medium storing an information processing program for causing a computer to execute processing, the processing comprising:
acquiring a sound signal collected by a microphone provided in a venue including a skating rink and a first video obtained by photographing a competitor on the skating rink;
estimating a takeoff-from-ice time and a landing-on-ice time of a jump performed by the competitor according to a silencing and a return of an ice sound based on the sound signal; and
synchronizing time information of the sound signal with time information of the first video, and specifying each of a location corresponding to the takeoff-from-ice time and a location corresponding to the landing-on-ice time in a trajectory of a location of the competitor on the skating rink based on the first video.
